# EUROPÄISCHE PATENTANMELDUNG

(11) **EP 4 571 236 A1**
(43) Veröffentlichungstag der Anmeldung: **18.06.2025**
(21) Anmeldenummer: 23217246.0
(22) Anmeldetag: 15.12.2023
(51) Int. Cl.: F41H 5/02, F41H 5/04

(54) **ZICKZACKFÖRMIGES SCHUTZELEMENT SOWIE EIN VERFAHREN ZU DESSEN HERSTELLUNG**

(71) Anmelder: Benteler Automobiltechnik GmbH, 33102 Paderborn (DE)
(72) Erfinder: VON MÜLLER, Werner, 76646 Bruchsal (DE); KLASFAUSEWEH, Udo, 33334 Gütersloh (DE); RUWE, Andreas, 49152 Bad Essen (DE)
(74) Vertreter: Ksoll, Peter

(57) **Zusammenfassung**

Die Erfindung betrifft ein Verfahren zur Herstellung eines aus mehreren Einzelprofilen (3, 4, 5, 6) gebildeten zickzackförmigen Schutzelementes (2) mit folgenden Verfahrensschritten:
a) Bereitstellen der Einzelprofile (3, 4, 5, 6),
b) Verschweißen der Einzelprofile (3, 4, 5, 6) zu einer zickzackförmigen Vorform (1) des Schutzelementes (2) unter Ausbildung wenigstens einer Schweißnaht (8, 10), wobei die Einzelprofile (3, 4, 5, 6) in einem Winkel (α) von 30° bis 120° zueinander verschweißt werden,
c) Einlegen der Vorform (1) in ein Warmformwerkzeug,
d) Umformen der Vorform (1) zu dem zickzackförmigen Schutzelement (2) in dem Warmformwerkzeug,
e) Formhärtung des zickzackförmigen Schutzelementes (2) in dem Warmformwerkzeug.

Die Erfindung betrifft weiterhin ein zickzackförmiges Schutzelement (2), welches insbesondere nach dem erfindungsgemäßen Verfahren hergestellt ist.

## Beschreibung

Die vorliegende Erfindung betrifft ein Verfahren zur Herstellung eines aus mehreren Einzelprofilen gebildeten zickzackförmigen Schutzelementes gemäß den Merkmalen des Patentanspruchs 1. Ferner betrifft die Erfindung ein zickzackförmiges Schutzelement gemäß den Merkmalen des Patentanspruchs 14.

Zickzackförmige Schutzelemente bzw. Panzerungselemente, welche Personen, Fahrzeugen oder anderen Systemen einen ballistischen Schutz bieten, sind im Stand der Technik bekannt. Die Herstellung entsprechender Schutzelemente erfolgt zumeist durch eine Umformung von ebenen Platinen bzw. Blechen. Die Platinen werden umgebogen, so dass ein zickzackförmiges Schutzelement entsteht. Die zickzackförmige Ausgestaltung bezieht sich dabei auf einen Querschnitt des Schutzelements und sorgt dafür, dass die auf das Schutzelement auftreffenden Projektile abgelenkt werden. Das Projektil gerät in Rotation und die Durchschlagskraft wird reduziert.

Ein zickzackförmiges Schutzelement ist beispielsweise aus der US 8 746 122 B1 bekannt.

Bei entsprechend hergestellten zickzackförmigen Schutzelementen entstehen jedoch umformtechnisch bedingte Biegeradien, die sich negativ auf die Schutzwirkung des Schutzelements auswirken können. Durch das Biegen verringert sich die Werkstoffdicke an den Biegestellen des Werkstücks und somit die Widerstandsfähigkeit des Schutzelementes gegenüber Geschossen. Auch bereits bei großen Biegeradien, also bei geringer Biegung, erfolgt eine Festigkeitsabnahme des Werkstücks, die sich ebenfalls negativ auf die Schutzfunktion des Schutzelements auswirken kann.

Es ist daher die Aufgabe der vorliegenden Erfindung, ein Verfahren zur Herstellung eines zickzackförmigen Schutzelementes aufzuzeigen, wobei das Schutzelement über seine gesamte Ausdehnung die notwendige Schutzwirkung aufrechterhält, ohne in bestimmten Bereichen während der Herstellung eine Schwächung und damit Einbußen hinsichtlich des Schutzvermögens zu erfahren. Weiterhin ist es auch Aufgabe der Erfindung ein derartiges zickzackförmiges Schutzelement bereitzustellen.

Die verfahrenstechnische Aufgabe wird gelöst durch ein Verfahren zur Herstellung eines zickzackförmigen Schutzelements gemäß den Merkmalen des Patentanspruchs 1. Der gegenständliche Teil der Aufgabe wird durch ein zickzackförmiges Schutzelement gemäß den Merkmalen des Patentanspruchs 14 gelöst.

Vorteilhafte Ausgestaltungen der Erfindungen sind in den Unteransprüchen wiedergegeben.

Das erfindungsgemäße Verfahren zur Herstellung eines aus mehreren Einzelprofilen gebildeten zickzackförmigen Schutzelementes, bei dem es sich insbesondere um eine Schutzwand handelt, umfasst die folgenden Verfahrensschritte:
a) Bereitstellen der Einzelprofile,
b) Verschweißen der Einzelprofile zu einer zickzackförmigen Vorform des Schutzelementes unter Ausbildung wenigstens einer Schweißnaht, wobei die Einzelprofile in einem Winkel von 30° bis 120° zueinander verschweißt werden,
c) Einlegen der Vorform in ein Warmformwerkzeug,
d) Umformen der Vorform zu dem zickzackförmigen Schutzelement in dem Warmformwerkzeug,
e) Formhärtung des zickzackförmigen Schutzelementes in dem Warmformwerkzeug.

Das erfindungsgemäße Verfahren zur Herstellung des zickzackförmigen Schutzelementes hat somit den Vorteil, dass im Umformschritt kein Biegeumformen mehr stattfinden muss. Die Einzelprofile sind bereits in dem gewünschten Winkel zueinander ausgerichtet und werden an ihren jeweiligen Längskanten miteinander verschweißt, sodass das Schutzelement in seinem Querschnitt zickzackförmig verläuft. Somit werden beim Umformen keine Biegeradien erzeugt, die eine Schwächung des herzustellenden Schutzelementes und damit der Schutzwirkung desselben bedeuten würden. Das Schutzelement weist über seine gesamte Ausdehnung die notwendige Schutzwirkung auf.

Dass die Einzelprofile in einem Winkel von 30° bis 120° zueinander verschweißt sind, hat sich im Rahmen der Erfindung als besonders vorteilhaft für die Ablenkung der Geschosse und somit für die Reduzierung der Durchschlagskraft herausgestellt. Dabei ist es nicht erforderlich, dass die für die Ausbildung des zickzackförmigen Schutzelementes verwendeten und miteinander verschweißten Einzelprofile immer einen identischen Winkel aufweisen. Der zickzackförmige Verlauf erhöht zudem die Stabilität des Schutzelementes. Dies ist insbesondere vorteilhaft, wenn das Schutzelement als eine Schutzwand verwendet wird.

Durch das Umformen der Vorform zu dem zickzackförmigen Schutzelement in dem Warmformwerkzeug, wird die Vorform nochmals kalibriert. Es kann sich zudem auch um ein Endumformen oder ein Endkalibrieren zur finalen Formgebung handeln. Insbesondere die zwischen den Einzelprofilen ausgebildeten Winkel können durch den Umformschritt genau eingestellt werden.

Durch die auf die Umformung folgende Formhärtung, bei der es sich insbesondere um eine Presshärten handelt, wird die Größe der durch das Schweißen benachbart zu den Schweißnähten erzeugten Wärmeeinflusszonen reduziert. Dadurch ergibt sich eine deutlich verbesserte Beschusssicherheit bis nahe an die Schweißnähte.

Vorzugsweise werden Einzelprofile aus Metall bzw. einer Metalllegierung verwendet, insbesondere Stahl. Bevorzugt wird bei Schritt d) des Verfahrens die Vorform auf eine Temperatur erwärmt, die höher ist als die Austenitisierungstemperatur des Metalls bzw. der Metalllegierung mit der höchsten Austenitisierungstemperatur. Dies führt zu einer Strukturänderung innerhalb des Metalls bzw. der Metalllegierung. Insbesondere erfolgt eine kubisch flächenzentrierte Modifikation der Kristallstruktur.

Die Formhärtung gemäß Schritt e) findet bevorzugt durch ein Abschrecken statt, mithin durch die schnelle Abkühlung des nunmehr umgeformten Schutzelementes im Warmformwerkzeug. Das dadurch entstehende Gefüge ist durch die Abschreckgeschwindigkeit beeinflusst und ist durch den Fachmann entsprechend einstellbar. Es entsteht ein martensitisches Gefüge mit hoher Festigkeit, welches für die Schutzwirkung des Schutzelements vorteilhaft ist.

Nach dem Abschrecken ist eine sofortige Anlassstufe von Vorteil, insbesondere bei der Verwendung von Einzelprofilen aus Stahl. Hierbei wird das bei der Härtung eines Stahls entstandene, spröde Tetragon, ein Martensit unter Ausscheidung von feinen Karbiden, in das kubische Martensitgefüge umgewandelt. Dieses besitzt ein geringeres Volumen und sorgt für eine Entspannung des Korngitters des Kristalls und beseitigt die sogenannte Glashärte des Werkstoffes. Insofern lassen sich durch diesen Verfahrensschritt besonders wirksam Schutzelemente mit entsprechend guter Schutzwirkung gegen einen ballistischen Beschuss herstellen.

Nach der Härtung des Schutzelements kann ein Laserbeschnitt des Schutzelementes erfolgen. Mittels des Laserbeschnitts kann dem Schutzelement seine finale Formgebung verliehen werden.

Vorzugsweise erfolgt das Verschweißen der Einzelprofile zu einer Vorform des Schutzelementes unter Bildung einer Schweißnaht auf der beschusszugewandten Seite der Einzelprofile und einer Schweißnaht auf der beschussabgewandten Seite der Einzelprofile. Die Bezeichnungen beschusszugewandte Seite bzw. beschussabgewandte Seite beziehen sich dabei auf die jeweilige Seite des Schutzelementes in seinem vorgesehenen Einsatzort. Durch die Ausbildung von zwei Schweißnähten wird eine sichere und widerstandsfähige Verbindung der jeweiligen Einzelprofile sichergestellt.

Bevorzugt wird beim Schweißen auf der beschusszugewandten Seite der Einzelprofile ein Schweißzusatzstoff verwendet, der eine höhere Härte aufweist als ein Schweißzusatzstoff, der beim Schweißen der Schweißnaht auf der beschussabgewandten Seite der Einzelprofile verwendet wird. Durch diese Maßnahme wird nochmals die Beschusssicherheit und somit die Schutzwirkung des Schutzelements, insbesondere im Bereich der Schweißnähte, erhöht.

Nach einer weiteren vorteilhaften Ausgestaltung der Erfindung ist es vorgesehen, dass beim Schweißen und Ausbilden der Schweißnähte ein austenitischer Zusatzstoff verwendet wird. Diese austenitischen Zusatzstoffe bewirken, dass die Spannungen beim Schweißen kompensiert werden. Zwar sind solche Zusatzstoffe an sich nicht beschusssicher, doch durch das erfindungsgemäße Härten und die Vermeidung von Biegeradien wird die Schutzwirkung im Bereich der Schweißnähte maximiert.

In einer besonders vorteilhaften Ausführungsvariante der Erfindung wird nach dem Verschweißen der Einzelprofile und/oder nach der Härtung des Schutzelementes im Bereich der Schweißnaht wenigstens ein Verstärkungselement mit den verschweißten Einzelprofilen gefügt, insbesondere verschweißt. Das Verstärkungselement, auch Overlap genannt, schützt die verdeckte Schweißnaht und verstärkt den Verbund der Einzelprofile. Somit wird die Schutzwirkung des Schutzelements erhöht. Bei dem Verstärkungselement handelt es sich bevorzugt um ein im Querschnitt rechteckförmiges Profil, welches endseitig jeweils mit einem der verschweißten Einzelprofile gefügt wird.

Das Verstärkungselement weist bevorzugt die gleiche Härte wie die Einzelprofile auf und ist besonders bevorzugt aus Schutzstahl ausgebildet. Es hat sich zudem als vorteilhaft erwiesen, dass das Verstärkungselement eine geringere Wandstärke als die Einzelprofile aufweist. Die Wandstärke des Verstärkungselements liegt bevorzugt zwischen 2 mm und 5 mm.

Das Verstärkungselement wird vorzugsweise in einem Winkel von 10° bis 40° mit dem jeweiligen Einzelprofil gefügt. Je größer der Winkel zwischen den gefügten Einzelprofilen ist, desto kleiner ist der Winkel zwischen dem Verstärkungselement und dem jeweiligen Einzelprofil.

Das Verstärkungselement kann auf der beschussabgewandten Seite oder der beschusszugewandten Seite der Einzelprofile mit diesen verschweißt werden.

Nach dem Verschweißen der Einzelprofile und/oder der Härtung des Schutzelementes kann eine Auftragsschweißnaht auf der Schweißnaht ausgebildet werden. Durch die Auftragsschweißnaht wird die beim Verschweißen der Einzelprofile zu einer zickzackförmigen Vorform des Schutzelementes ausgebildete Schweißnaht verstärkt. Die Schutzwirkung des Schutzelements wird somit erhöht. Auch eine Kombination von Auftragsschweißnaht und Verstärkungselement ist möglich.

Bevorzugt wird beim Auftragsschweißen der Auftragsschweißnaht ein Schweißzusatzstoff verwendet, der eine höhere Härte aufweist als ein Schweißzusatzstoff der beim Schweißen der Schweißnaht verwendet wird.

In einer besonders vorteilhaften Ausführungsvariante der Erfindung wird das Schutzelement nach der Fügung des Verstärkungselements und/oder nach der Ausbildung der Auftragsschweißnaht einer Endkalibrierung unterzogen. Dabei handelt es sich insbesondere um ein zweites Warmformen, was zu einem Härten der Schweißnähte und/oder der eingebrachten Verstärkungselemente führt. Damit wird die Beschusssicherheit und somit die Schutzwirkung des erfindungsgemäßen Schutzelementes nochmals erhöht.

In einer weiteren Ausführungsvariante der Erfindung werden die Einzelprofile unter Ausbildung eines Überstandes verschweißt. Eins der zu verschweißenden Einzelprofile steht somit etwas über das andere Einzelprofil über. Bei der Umformung der Vorform zu dem zickzackförmigen Schutzelement in dem Warmformwerkzeug wird der Überstand umgebogen, dergestalt, dass die Schweißnaht durch den Überstand verdeckt wird. Der umgebogene Überstand wirkt somit wie eine zusätzliche Schutzschicht und schützt die Schweißnaht vor einem auftreffenden Projektil und verstärkt die Stabilität des Schutzelementes. So kann die Schutzwirkung des Schutzelements weiter erhöht werden.

Vorzugsweise werden die Einzelprofile in einem Winkel von 45° bis 110°, bevorzugt von 60° bis 100°, besonders bevorzugt von 80° bis 90° zueinander verschweißt. Dies hat sich im Rahmen der Erfindung als besonders vorteilhaft für den Widerstand des Schutzelements gegenüber einem Beschuss sowie für dessen Stabilität herausgestellt.

Bevorzugt werden Einzelprofile aus Stahlblechen, aus walzharten Stahlblechen oder aus gehärteten Stahlblechen verwendet.

Insbesondere werden Einzelprofile mit einer Härte von 500 bis 700 Brinell verwendet.

Es werden insbesondere Einzelprofile mit einer Wandstärke von 3 mm bis 10 mm, bevorzugt von 5 mm bis 8 mm verwendet. Diese Wandstärken haben sich als besonders guter Kompromiss zwischen Beschusssicherheit und Gewicht des Schutzelementes herausgestellt.

Das Schutzelement kann in einem abschließenden Verfahrensschritt mit einer Schutzschicht ummantelt werden. Die ist beispielsweise bei einem Einsatz des Schutzelements an der Außenwand eines Fahrzeugs vorteilhaft.

Die Erfindung umfasst weiterhin ein zickzackförmiges Schutzelement, welches insbesondere nach dem erfindungsgemäßen Herstellungsverfahren hergestellt ist. Das Schutzelement ist aus mehreren Einzelprofilen ausgebildet und die Einzelprofile sind zickzackförmig in einem Winkel von 30° bis 120°, insbesondere in einem Winkel von 45° bis 110°, bevorzugt von 60° bis 100°, besonders bevorzugt von 80° bis 90° zueinander verschweißt. Das erfindungsgemäße Schutzelement ist warmgeformt und formgehärtet. Das zickzackförmige Schutzelement erhält somit über seine gesamte Ausdehnung die notwendige Schutzwirkung aufrecht, ohne in bestimmten Bereichen während der Herstellung eine Schwächung und damit Einbußen hinsichtlich des Schutzvermögens zu erfahren.

Bevorzugt sind die Einzelprofile unter Bildung einer Schweißnaht auf einer beschusszugewandten Seite der Einzelprofile und einer Schweißnaht auf der beschussabgewandten Seite der Einzelprofile verschweißt.

In einer vorteilhaften Ausführungsvariante der Erfindung weist die Schweißnaht auf der beschusszugewandten Seite der Einzelprofile einen Schweißzusatzstoff auf, der eine höhere Härte aufweist als ein Schweißzusatzstoff der Schweißnaht auf der beschussabgewandten Seite der Einzelprofile.

Im Bereich der Schweißnaht ist vorzugweise wenigstens ein Verstärkungselement mit den verschweißten Einzelprofilen gefügt, insbesondere verschweißt. Das Verstärkungselement, auch Overlap genannt, schützt die verdeckte Schweißnaht und verstärkt den Verbund der Einzelprofile. Somit wird die Schutzwirkung des Schutzelements erhöht. Bei dem Verstärkungselement handelt es sich bevorzugt um ein im Querschnitt rechteckförmiges Profil, welches endseitig jeweils mit einem der verschweißten Einzelprofile gefügt ist.

Das Verstärkungselement weist bevorzugt die gleiche Härte wie die Einzelprofile auf. Es hat sich zudem als vorteilhaft erwiesen, dass das Verstärkungselement eine geringere Wandstärke als die Einzelprofile aufweist. Die Wandstärke des Verstärkungselements liegt bevorzugt zwischen 2 mm und 5 mm.

Das Verstärkungselement ist vorzugsweise in einem Winkel von 10° bis 40° mit dem jeweiligen Einzelprofil gefügt. Je größer der Winkel zwischen den gefügten Einzelprofilen ist, desto kleiner ist der Winkel zwischen dem Verstärkungselement und dem jeweiligen Einzelprofil.

Das Verstärkungselement kann auf der beschussabgewandten Seite oder der beschusszugewandten Seite der Einzelprofile mit diesen verschweißt werden.

In einer weiteren vorteilhaften Ausführungsvariante der Erfindung ist eine Auftragsschweißnaht auf der Schweißnaht ausgebildet. Durch die Auftragsschweißnaht wird die Schweißnaht verstärkt. Die Schutzwirkung des Schutzelements wird somit erhöht. Auch eine Kombination von Auftragsschweißnaht und Verstärkungselement ist möglich.

Die Auftragsschweißnaht weist bevorzugt einen Schweißzusatzstoff auf, der eine höhere Härte aufweist als ein Schweißzusatzstoff der Schweißnaht.

Vorzugsweise können die Einzelprofile unter Ausbildung eines Überstands verschweißt sein, wobei der Überstand umgebogen ist, dergestalt, dass die Schweißnaht durch den Überstand verdeckt ist.

Die Einzelprofile sind insbesondere aus Stahlblechen, bevorzugt aus walzharten Stahlblechen, besonders bevorzugt aus gehärteten Stahlblechen gebildet.

Die Einzelprofile weisen bevorzugt eine Härte von 500 bis 700 Brinell auf.

Es hat sich als vorteilhaft erwiesen, wenn die Einzelprofile eine Wandstärke von 3 bis 10 mm, bevorzugt von 5 bis 8 mm aufweisen.

Weitere Ziele, Vorteile, Merkmale und Anwendungsmöglichkeiten der vorliegenden Erfindung ergeben sich aus der nachfolgenden Beschreibung. Bevorzugte Ausführungsformen werden in den schematischen Figuren dargestellt. Diese dienen dem einfachen Verständnis der Erfindung. Es zeigen:
- Figur 1: ein erfindungsgemäßes Verfahren zur Herstellung einer Vorform eines zickzackförmigen Schutzelements,
- Figur 2: ein erstes Ausführungsbeispiel eines erfindungsgemäßen zickzackförmigen Schutzelements in einer Draufsicht,
- Figur 3: ein zweites Ausführungsbeispiel eines erfindungsgemäßen zickzackförmigen Schutzelements in einer Draufsicht,
- Figur 4: ein drittes Ausführungsbeispiel eines erfindungsgemäßen zickzackförmigen Schutzelements in einer Draufsicht,
- Figur 5: ein weiteres erfindungsgemäßes Verfahren zur Herstellung eines zickzackförmigen Schutzelements und
- Figur 6: ein viertes Ausführungsbeispiel eines erfindungsgemäßen zickzackförmigen Schutzelementes in einer Draufsicht.

In den Figuren werden für gleich oder ähnliche Bauteile dieselben Bezugszeichen verwendet, auch wenn eine wiederholte Beschreibung aus Vereinfachungsgründen entfällt.

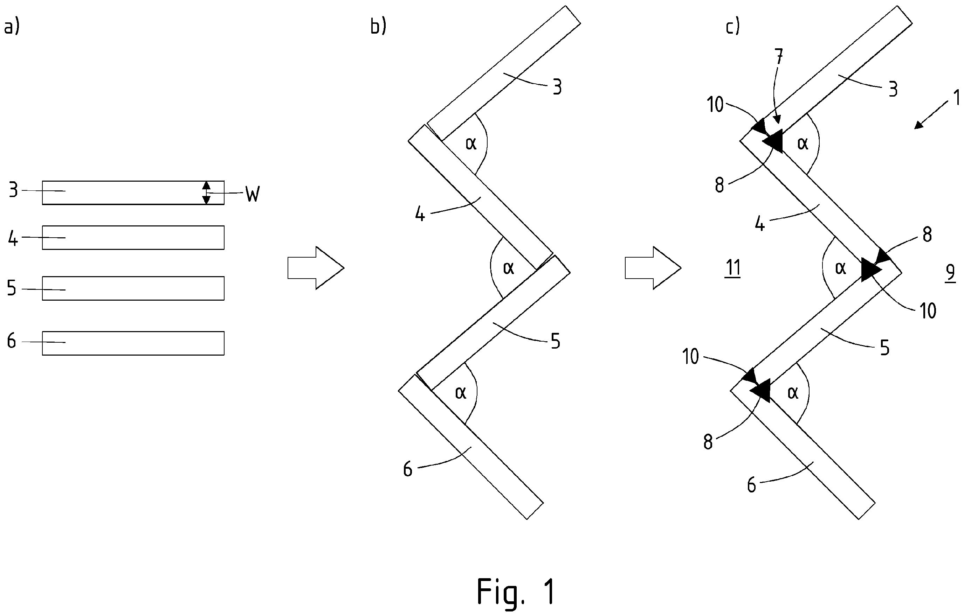

Die Figur 1 zeigt die erfindungsgemäße Herstellung einer Vorform 1 eines zickzackförmigen Schutzelements 2 in einer Draufsicht.

Wie in Figur 1 a) dargestellt, werden zur Herstellung der Vorform 1 zuerst Einzelprofile 3, 4, 5 und 6 bereitgestellt. Es werden Einzelprofile 3, 4, 5, 6 aus Stahlblechen mit einer Wandstärke W von 3 mm bis 10 mm verwendet.

Die Einzelprofile 3, 4, 5 und 6 werden in einem zickzackförmigen Verlauf angeordnet, siehe Figur 1 b). Die jeweiligen benachbarten Einzelprofile 3 und 4, 4 und 5 sowie 5 und 6 weisen dabei jeweils einem Winkel α von 30° bis 120° zueinander auf.

Wie in der Figur 1 c) gezeigt ist, werden die jeweils benachbarten Einzelprofile 3 und 4, 4 und 5 sowie 5 und 6 in Bereich ihrer jeweiligen Endabschnitte 7 unter Ausbildung einer Schweißnaht 8 auf einer beschussabgewandten Seite 9 der Einzelprofile 3, 4, 5 und 6 und einer Schweißnaht 10 auf einer beschusszugewandten Seite 11 miteinander verschweißt. Die jeweiligen benachbarten Einzelprofile 3 und 4, 4 und 5 sowie 5 und 6 werden dabei jeweils in einem Winkel α von 30° bis 120° zueinander verschweißt. Die beschusszugewandten Seite 11 und die beschussabgewandte Seite 9 beziehen sich dabei auf die entsprechenden Seiten des zickzackförmigen Schutzelements 2 bezogen auf den späteren Einsatzort.

Nach dem Verschweißen der Einzelprofile 3, 4, 5 und 6 wird die Vorform 1 des Schutzelementes 2 in ein nicht näher dargestelltes Warmformwerkzeug eingelegt und auf die Austenitisierungstemperatur des Stahls erwärmt. Anschließend erfolgt ein Umformen, insbesondere Endumformen bzw. Endkalibrieren der Vorform 1 zu dem zickzackförmigen Schutzelement 2. Nach dem Umformen wird das Schutzelement 2 gehärtet, insbesondere pressgehärtet. Anschließend kann das Schutzelement 2 vergütet und mittels eines Laserbeschnitts finale Korrekturen vorgenommen werden.

Das erfindungsgemäße Herstellungsverfahren hat den Vorteil, dass kein beigeumformen erforderlich ist, welches zu einer Schwächung des zickzackförmigen Schutzelementes 2 führen würde.

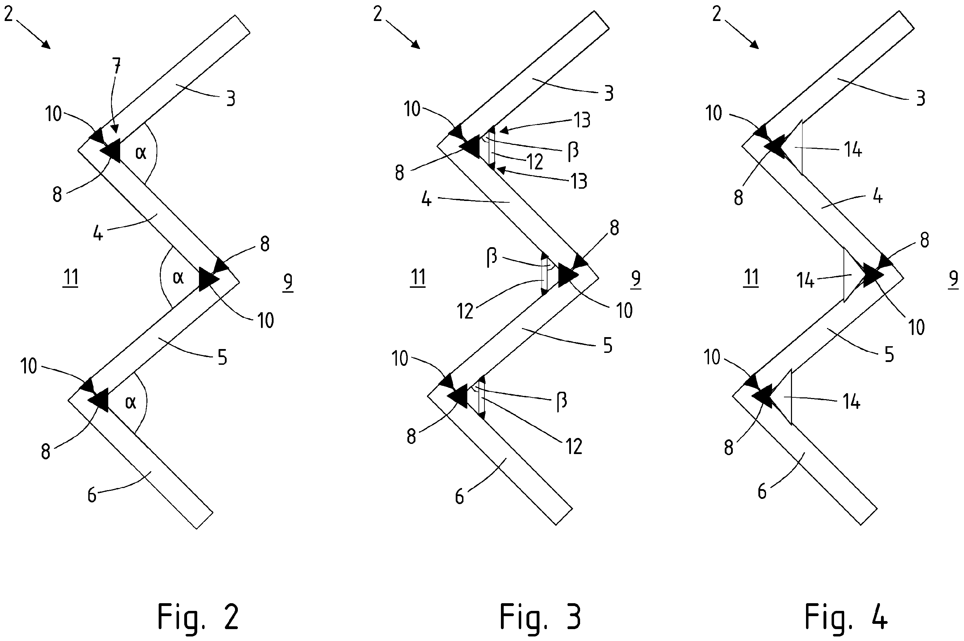

Die Figur 2 zeigt ein entsprechend hergestelltes zickzackförmiges Schutzelement 2 in einer Draufsicht.

Beim Schweißen der Schweißnähte 10 auf der beschusszugewandten Seite 11 der Einzelprofile 3, 4, 5 und 6 wird ein Schweißzusatzstoff verwendet, der eine höhere Härte aufweist, als ein Schweißzusatzstoff der beim Schweißen der Schweißnähte 8 auf der beschusszugewandten Seite 9 der Einzelprofile 3, 4, 5 und 6 verwendet wird.

Es werden Einzelprofile 3, 4, 5 und 6 mit einer Härte von 500 bis 700 Brinell verwendet.

Nach dem Verschweißen der Einzelprofile 3, 4, 5 und 6 und/oder nach der Härtung des zickzackförmigen Schutzelementes 2 kann im Bereich der Schweißnähte 8, 10 jeweils ein Verstärkungselement 12 mit den verschweißten Einzelprofilen 3 und 4, 4 und 5 sowie 5 und 6 verschweißt werden. Durch die Verstärkungselemente 12 werde die darunterliegenden Schweißnähte 8, 10 geschützt und verstärkt. Zudem wird der Verbund zwischen den Einzelprofilen verbessert und somit die Schutzwirkung des Schutzelementes 2 erhöht. Ein entsprechend hergestelltes Schutzelement 2 ist in der Figur 3 gezeigt.

Die Verstärkungselemente 12 sind im Querschnitt rechteckig ausgebildet und an ihren jeweiligen Endbereichen 13 mit den entsprechenden Einzelprofilen 3, 4, 5 und 6 verschweißt. Zwischen den Verstärkungselementen 12 und den jeweiligen Einzelprofilen 3, 4, 5 und 6 ist dabei jeweils ein Winkel β zwischen 10° und 40° ausgebildet. Je größer der Winkel α zwischen den verschweißten Einzelprofilen 3 und 4, 4 und 5 sowie 5 und 6 ist, desto kleiner ist der Winkel β zwischen den Verstärkungselementen 12 und den jeweiligen Einzelprofilen 3, 4, 5 und 6.

Die Verstärkungselemente 12 weisen die gleiche Härte wie die einzelnen Einzelprofile 3, 4, 5 und 6 auf. Die Materialstärke der Verstärkungselemente 12 liegt zwischen 2 mm und 5 mm.

Ergänzend oder alternativ zu den Verstärkungselementen 12 kann nach dem Verschweißen der Einzelprofile 3, 4, 5 und 6 und/oder nach der Härtung des Schutzelementes 2 mittels Auftragsschweißen eine Auftragsschweißnaht 14 auf den Schweißnähten 8, 10 ausgebildet werden. Durch die Auftragsschweißnaht 14 wird die darunterliegende Schweißnaht 8, 10 zusätzlich verstärkt, was die Schutzwirkung des Schutzelements 2 erhöht. Ein entsprechend hergestelltes Schutzelement 2 ist in der Figur 4 gezeigt.

Beim Auftragsschweißen der Auftragsschweißnaht 14 wird ein Schweißzusatzstoff verwendet, der eine höhere Härte aufweist als ein Schweißzusatzstoff, der beim Schweißen der Schweißnähte 8, 10 verwendet wird. Auch dies wirkt sich vorteilhaft auf die Schutzwirkung des Schutzelements 2 aus.

Das Schutzelement 2 wird nach dem Verschweißen der Verstärkungselemente 12 und/oder nach der Ausbildung der Auftragsschweißnähte 14 einer Endkalibrierung unterzogen. So wird sichergestellt, dass das Schutzelement 2 den genauen Produktionsvorgaben entspricht.

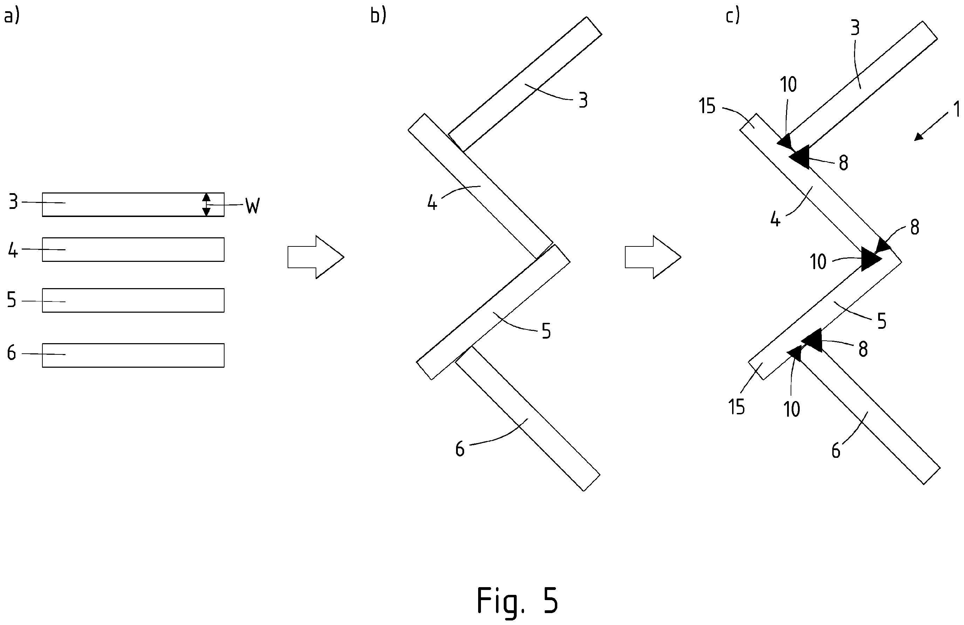

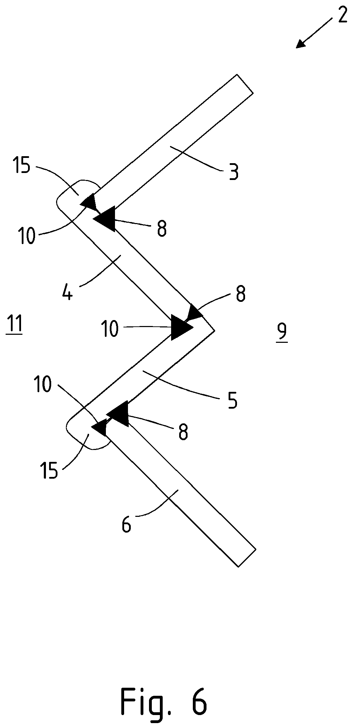

Die Figur 5 zeigt ein weiteres erfindungsgemäßes Herstellungsverfahren einer Vorform 1 des zickzackförmigen Schutzelementes 2. Hier werden die Einzelprofile 3 und 4 sowie 5 und 6 unter Ausbildung eines Überstands 15 miteinander verschweißt. Beim anschließenden Umformen der Vorform 1 zu dem zickzackförmigen Schutzelement 2 in dem Warmformwerkzeug wird der Überstand 15 umgebogen, dergestalt, dass die Schweißnähte 10 durch den Überstand 13 verdeckt werden. Das resultierende zickzackförmige Schutzelement 2 ist in Figur 6 gezeigt. Der Überstand 15 befindet sich auf der beschusszugewandten Seite 11 des zickzackförmigen Schutzelements 2, so dass die verdeckten Schweißnähte 10 geschützt sind.

### Bezugszeichen:

- 1 -: Vorform
- 2 -: Schutzelement
- 3 -: Einzelprofil
- 4 -: Einzelprofil
- 5 -: Einzelprofil
- 6 -: Einzelprofil
- 7 -: Endabschnitt von 3, 4, 5, 6
- 8 -: beschussabgewandte Schweißnaht
- 9 -: beschussabgewandte Seite von 3, 4, 5, 6
- 10 -: beschusszugewandte Schweißnaht
- 11 -: beschusszugewandte Seite von 3, 4, 5, 6
- 12 -: Verstärkungselement
- 13 -: Endbereich von 12
- 14 -: Auftragsschweißnaht
- 15 -: Überstand

- W-: Wandstärke
- α-: Winkel
- β-: Winkel

## Patentansprüche

1. Verfahren zur Herstellung eines aus mehreren Einzelprofilen (3, 4, 5, 6) gebildeten zickzackförmigen Schutzelementes (2) mit folgenden Verfahrensschritten:
a) Bereitstellen der Einzelprofile (3, 4, 5, 6),
b) Verschweißen der Einzelprofile (3, 4, 5, 6) zu einer zickzackförmigen Vorform (1) des Schutzelementes (2) unter Ausbildung wenigstens einer Schweißnaht (8, 10), wobei die Einzelprofile (3, 4, 5, 6) in einem Winkel (α) von 30° bis 120° zueinander verschweißt werden,
c) Einlegen der Vorform (1) in ein Warmformwerkzeug,
d) Umformen der Vorform (1) zu dem zickzackförmigen Schutzelement (2) in dem Warmformwerkzeug,
e) Formhärtung des zickzackförmigen Schutzelementes (2) in dem Warmformwerkzeug.

2. Verfahren nach Anspruch 1, **dadurch gekennzeichnet, dass** nach der Härtung des Schutzelementes (2) ein Laserbeschnitt des Schutzelementes (2) erfolgt.

3. Verfahren nach Anspruch 1 oder 2, **dadurch gekennzeichnet, dass** das Verschweißen der Einzelprofile (3, 4, 5, 6) zu einer Vorform (1) des Schutzelementes (2) unter Bildung einer Schweißnaht (10) auf einer beschusszugewandten Seite (11) der Einzelprofile (3, 4, 5, 6) und einer Schweißnaht (8) auf der beschussabgewandten Seite (9) der Einzelprofile (3, 4, 5, 6) erfolgt.

4. Verfahren nach einem der vorhergehenden Ansprüche, **dadurch gekennzeichnet, dass** beim Schweißen der Schweißnaht (10) auf der beschusszugewandten Seite (11) der Einzelprofile (3, 4, 5, 6) ein Schweißzusatzstoff verwendet wird, der eine höhere Härte aufweist als ein Schweißzusatzstoff der beim Schweißen der Schweißnaht (8) auf der beschussabgewandten Seite (9) der Einzelprofile (3, 4, 5, 6) verwendet wird.

5. Verfahren nach einem der vorhergehenden Ansprüche, **dadurch gekennzeichnet, dass** nach dem Verschweißen der Einzelprofile (3, 4, 5, 6) und/oder der Härtung des Schutzelementes (2) im Bereich der Schweißnaht (8, 10) wenigstens ein Verstärkungselement (12) mit den verschweißten Einzelprofilen (3, 4, 5, 6) gefügt, insbesondere verschweißt wird.

6. Verfahren nach einem der vorhergehenden Ansprüche, **dadurch gekennzeichnet, dass** nach dem Verschweißen der Einzelprofile (3, 4, 5, 6) und/oder der Härtung des Schutzelementes (2) mittels Auftragsschweißen eine Auftragsschweißnaht (14) auf der Schweißnaht (8, 10) ausgebildet wird.

7. Verfahren nach einem der vorhergehenden Ansprüche, **dadurch gekennzeichnet, dass** beim Auftragsschweißen der Auftragsschweißnaht (14) ein Schweißzusatzstoff verwendet wird, der eine höhere Härte aufweist als ein Schweißzusatzstoff der beim Schweißen der Schweißnaht (8, 10) verwendet wird.

8. Verfahren nach einem der vorhergehenden Ansprüche, **dadurch gekennzeichnet, dass** das Schutzelement (2) nach der Fügung des Verstärkungselements (12) und/oder nach der Ausbildung der Auftragsschweißnaht (14) einer Endkalibrierung unterzogen wird.

9. Verfahren nach einem der vorhergehenden Ansprüche, **dadurch gekennzeichnet, dass** die Einzelprofile (3, 4, 5, 6) unter Ausbildung eines Überstands (15) verschweißt werden, wobei der Überstand (15) bei der Umformung der Vorform (1) zu dem zickzackförmigen Schutzelement (2) in dem Warmformwerkzeug umgebogen wird, dergestalt, dass die Schweißnaht (8, 10) durch den Überstand (15) verdeckt wird.

10. Verfahren nach einem der vorhergehenden Ansprüche, **dadurch gekennzeichnet, dass** die Einzelprofile (3, 4, 5, 6) in einem Winkel von 45° bis 110°, bevorzugt von 60° bis 100°, besonders bevorzugt von 80° bis 90° zueinander verschweißt werden.

11. Verfahren nach einem der vorhergehenden Ansprüche, **dadurch gekennzeichnet, dass** Einzelprofile (3, 4, 5, 6) aus Stahlblechen, bevorzugt aus walzharten Stahlblechen, besonders bevorzugt aus gehärteten Stahlblechen verwendet werden.

12. Verfahren nach einem der vorhergehenden Ansprüche, **dadurch gekennzeichnet, dass** Einzelprofile (3, 4, 5, 6) mit einer Härte von 500 bis 700 Brinell verwendet werden.

13. Verfahren nach einem der vorhergehenden Ansprüche, **dadurch gekennzeichnet, dass** Einzelprofile (3, 4, 5, 6) mit einer Wandstärke (W) von 3 bis 10 mm, bevorzugt von 5 bis 8 mm verwendet werden.

14. Zickzackförmiges Schutzelement (2), insbesondere hergestellt nach einem der vorhergehenden Ansprüche, wobei das Schutzelement (2) aus mehreren Einzelprofilen (3, 4, 5, 6) ausgebildet ist und die Einzelprofile (3, 4, 5, 6) zickzackförmig verschweißt sind, wobei die Einzelprofile (3, 4, 5, 6) in einem Winkel von 30° bis 120° zueinander verschweißt sind und das Schutzelement (2) warmgeformt und formgehärtet ist.

15. Zickzackförmiges Schutzelement (2) nach Anspruch 14, **dadurch gekennzeichnet, dass** die Einzelprofile (3, 4, 5, 6) unter Bildung einer Schweißnaht (10) auf einer beschusszugewandten Seite (11) der Einzelprofile (3, 4, 5, 6) und einer Schweißnaht (8) auf der beschussabgewandten Seite (9) der Einzelprofile (3, 4, 5, 6) verschweißt sind.

16. Zickzackförmiges Schutzelement (2) nach Anspruch 15, **dadurch gekennzeichnet, dass** die Schweißnaht (10) auf der beschusszugewandten Seite (11) der Einzelprofile (3, 4, 5, 6) einen Schweißzusatzstoff aufweist, der eine höhere Härte aufweist als ein Schweißzusatzstoff der Schweißnaht (8) auf der beschussabgewandten Seite (9) der Einzelprofile (3, 4, 5, 6).

17. Zickzackförmiges Schutzelement (2) nach einem der Ansprüche 14 bis 16, **dadurch gekennzeichnet, dass** im Bereich der Schweißnaht (8, 10) wenigstens ein Verstärkungselement (12) mit den verschweißten Einzelprofilen (3, 4, 5, 6) gefügt, insbesondere verschweißt ist.

18. Zickzackförmiges Schutzelement (2) nach einem der Ansprüche 14 bis 17, **dadurch gekennzeichnet, dass** eine Auftragsschweißnaht (14) auf der Schweißnaht (8, 10) ausgebildet ist.

19. Zickzackförmiges Schutzelement (2) nach Anspruch 18, **dadurch gekennzeichnet, dass** die Auftragsschweißnaht (14) einen Schweißzusatzstoff aufweist, der eine höhere Härte aufweist als ein Schweißzusatzstoff der Schweißnaht (8, 10).

20. Zickzackförmiges Schutzelement (2) nach einem der Ansprüche 14 bis 19, **dadurch gekennzeichnet, dass** die Einzelprofile (3, 4, 5, 6) unter Ausbildung eines Überstands (15) verschweißt sind, wobei der Überstand (15) umgebogen ist, dergestalt, dass die Schweißnaht (8, 10) durch den Überstand (15) verdeckt ist.

21. Zickzackförmiges Schutzelement (2) nach einem der Ansprüche 14 bis 20, **dadurch gekennzeichnet, dass** die Einzelprofile (3, 4, 5, 6) in einem Winkel von 45° bis 110°, bevorzugt von 60° bis 100°, besonders bevorzugt von 80° bis 90° zueinander verschweißt sind.

## Geänderte Patentansprüche

### Geänderte Patentansprüche gemäss Regel 137(2) EPÜ.

1. Verfahren zur Herstellung eines aus mehreren Einzelprofilen (3, 4, 5, 6) gebildeten zickzackförmigen Schutzelementes (2) mit folgenden Verfahrensschritten:
a) Bereitstellen der Einzelprofile (3, 4, 5, 6),
b) Verschweißen der Einzelprofile (3, 4, 5, 6) zu einer zickzackförmigen Vorform (1) des Schutzelementes (2) unter Ausbildung wenigstens einer Schweißnaht (8, 10), wobei die Einzelprofile (3, 4, 5, 6) in einem Winkel (α) von 30° bis 120° zueinander verschweißt werden,
c) Einlegen der Vorform (1) in ein Warmformwerkzeug,
d) Umformen der Vorform (1) zu dem zickzackförmigen Schutzelement (2) in dem Warmformwerkzeug,
e) Formhärtung des zickzackförmigen Schutzelementes (2) in dem Warmformwerkzeug.

2. Verfahren nach Anspruch 1, **dadurch gekennzeichnet, dass** nach der Härtung des Schutzelementes (2) ein Laserbeschnitt des Schutzelementes (2) erfolgt.

3. Verfahren nach Anspruch 1 oder 2, **dadurch gekennzeichnet, dass** das Verschweißen der Einzelprofile (3, 4, 5, 6) zu einer Vorform (1) des Schutzelementes (2) unter Bildung einer Schweißnaht (10) auf einer beschusszugewandten Seite (11) der Einzelprofile (3, 4, 5, 6) und einer Schweißnaht (8) auf der beschussabgewandten Seite (9) der Einzelprofile (3, 4, 5, 6) erfolgt.

4. Verfahren nach Anspruch 3, **dadurch gekennzeichnet, dass** beim Schweißen der Schweißnaht (10) auf der beschusszugewandten Seite (11) der Einzelprofile (3, 4, 5, 6) ein Schweißzusatzstoff verwendet wird, der eine höhere Härte aufweist als ein Schweißzusatzstoff der beim Schweißen der Schweißnaht (8) auf der beschussabgewandten Seite (9) der Einzelprofile (3, 4, 5, 6) verwendet wird.

5. erfahren nach einem der vorhergehenden Ansprüche, **dadurch gekennzeichnet, dass** nach dem Verschweißen der Einzelprofile (3, 4, 5, 6) und/oder der Härtung des Schutzelementes (2) im Bereich der Schweißnaht (8, 10) wenigstens ein Verstärkungselement (12) mit den verschweißten Einzelprofilen (3, 4, 5, 6) gefügt, insbesondere verschweißt wird.

6. Verfahren nach einem der vorhergehenden Ansprüche, **dadurch gekennzeichnet, dass** nach dem Verschweißen der Einzelprofile (3, 4, 5, 6) und/oder der Härtung des Schutzelementes (2) mittels Auftragsschweißen eine Auftragsschweißnaht (14) auf der Schweißnaht (8, 10) ausgebildet wird.

7. Verfahren nach Anspruch 6, **dadurch gekennzeichnet, dass** beim Auftragsschweißen der Auftragsschweißnaht (14) ein Schweißzusatzstoff verwendet wird, der eine höhere Härte aufweist als ein Schweißzusatzstoff der beim Schweißen der Schweißnaht (8, 10) verwendet wird.

8. Verfahren nach einem der Ansprüche 5 bis 7, **dadurch gekennzeichnet, dass** das Schutzelement (2) nach der Fügung des Verstärkungselements (12) und/oder nach der Ausbildung der Auftragsschweißnaht (14) einer Endkalibrierung unterzogen wird.

9. Verfahren nach einem der vorhergehenden Ansprüche, **dadurch gekennzeichnet, dass** die Einzelprofile (3, 4, 5, 6) unter Ausbildung eines Überstands (15) verschweißt werden, wobei der Überstand (15) bei der Umformung der Vorform (1) zu dem zickzackförmigen Schutzelement (2) in dem Warmformwerkzeug umgebogen wird, dergestalt, dass die Schweißnaht (8, 10) durch den Überstand (15) verdeckt wird.

10. Verfahren nach einem der vorhergehenden Ansprüche, **dadurch gekennzeichnet, dass** die Einzelprofile (3, 4, 5, 6) in einem Winkel von 45° bis 110°, bevorzugt von 60° bis 100°, besonders bevorzugt von 80° bis 90° zueinander verschweißt werden.

11. Verfahren nach einem der vorhergehenden Ansprüche, **dadurch gekennzeichnet, dass** Einzelprofile (3, 4, 5, 6) aus Stahlblechen, bevorzugt aus walzharten Stahlblechen, besonders bevorzugt aus gehärteten Stahlblechen verwendet werden.

12. Verfahren nach einem der vorhergehenden Ansprüche, **dadurch gekennzeichnet, dass** Einzelprofile (3, 4, 5, 6) mit einer Härte von 500 bis 700 Brinell verwendet werden.

13. Verfahren nach einem der vorhergehenden Ansprüche, **dadurch gekennzeichnet, dass** Einzelprofile (3, 4, 5, 6) mit einer Wandstärke (W) von 3 bis 10 mm, bevorzugt von 5 bis 8 mm verwendet werden.

14. Zickzackförmiges Schutzelement (2), insbesondere hergestellt nach einem der vorhergehenden Ansprüche, wobei das Schutzelement (2) aus mehreren Einzelprofilen (3, 4, 5, 6) ausgebildet ist und die Einzelprofile (3, 4, 5, 6) zickzackförmig verschweißt sind, wobei die Einzelprofile (3, 4, 5, 6) in einem Winkel von 30° bis 120° zueinander verschweißt sind und das Schutzelement (2) warmgeformt und formgehärtet ist.

15. Zickzackförmiges Schutzelement (2) nach Anspruch 14, **dadurch gekennzeichnet, dass** die Einzelprofile (3, 4, 5, 6) unter Bildung einer Schweißnaht (10) auf einer beschusszugewandten Seite (11) der Einzelprofile (3, 4, 5, 6) und einer Schweißnaht (8) auf der beschussabgewandten Seite (9) der Einzelprofile (3, 4, 5, 6) verschweißt sind.

16. Zickzackförmiges Schutzelement (2) nach Anspruch 15, **dadurch gekennzeichnet, dass** die Schweißnaht (10) auf der beschusszugewandten Seite (11) der Einzelprofile (3, 4, 5, 6) einen Schweißzusatzstoff aufweist, der eine höhere Härte aufweist als ein Schweißzusatzstoff der Schweißnaht (8) auf der beschussabgewandten Seite (9) der Einzelprofile (3, 4, 5, 6).

17. Zickzackförmiges Schutzelement (2) nach einem der Ansprüche 14 bis 16, **dadurch gekennzeichnet, dass** im Bereich der Schweißnaht (8, 10) wenigstens ein Verstärkungselement (12) mit den verschweißten Einzelprofilen (3, 4, 5, 6) gefügt, insbesondere verschweißt ist.

18. Zickzackförmiges Schutzelement (2) nach einem der Ansprüche 14 bis 17, **dadurch gekennzeichnet, dass** eine Auftragsschweißnaht (14) auf der Schweißnaht (8, 10) ausgebildet ist.

19. Zickzackförmiges Schutzelement (2) nach Anspruch 18, **dadurch gekennzeichnet, dass** die Auftragsschweißnaht (14) einen Schweißzusatzstoff aufweist, der eine höhere Härte aufweist als ein Schweißzusatzstoff der Schweißnaht (8, 10).

20. Zickzackförmiges Schutzelement (2) nach einem der Ansprüche 14 bis 19, **dadurch gekennzeichnet, dass** die Einzelprofile (3, 4, 5, 6) unter Ausbildung eines Überstands (15) verschweißt sind, wobei der Überstand (15) umgebogen ist, dergestalt, dass die Schweißnaht (8, 10) durch den Überstand (15) verdeckt ist.

21. Zickzackförmiges Schutzelement (2) nach einem der Ansprüche 14 bis 20, **dadurch gekennzeichnet, dass** die Einzelprofile (3, 4, 5, 6) in einem Winkel von 45° bis 110°, bevorzugt von 60° bis 100°, besonders bevorzugt von 80° bis 90° zueinander verschweißt sind.
